# EUROPÄISCHE PATENTANMELDUNG

(11) **EP 1 033 589 A2**
(43) Veröffentlichungstag der Anmeldung: **06.09.2000**
(21) Anmeldenummer: 00100105.6
(22) Anmeldetag: 04.01.2000
(51) Int. Cl.: G01V 3/17

(54) **Sondenanordnung**

(30) Priorität: 03.03.1999 DE 29903856 U
(71) Anmelder: FIRMA ING. KLAUS EBINGER, D-51149 Köln (DE)
(72) Erfinder: Günnewig, Augustinus, D-50733 Köln (DE); Niessen, Rolf, D-51145 Köln (DE); Christ, Roland, D-53859 Niederkassel-Ranzel (DE); Ebonger, Klaus, D-51143 Köln (DE)
(74) Vertreter: Heim, Hans-Karl, Dipl.-Ing.

(57) **Zusammenfassung**

Sondenanordnung (2) zur elektromagnetischen Detektion von Objekten, mit mindestens einem Rahmen (4), mindestens einem Steg (6), welcher die von dem Rahmen (4) definierte Fläche teilt, und mindestens einer Sendeschleife und/oder mindestens einer Empfangsschleife, welche in dem Rahmen (4) und/oder dem Steg (6) angeordnet ist/sind, wobei der Rahmen mit einer fahrbaren Einrichtung (10) kombiniert ist.

## Beschreibung

Die Erfindung betrifft eine Sondenanordnung zur elektromagnetischen Detektion von Objekten, mit mindestens einem Rahmen, mindestens einem Steg, welcher die von dem Rahmen definierte Fläche teilt, und mindestens einer Sendeschleife und/oder mindestens einer Empfangsschleife, welche in dem Rahmen und/oder dem Steg angeordnet ist/sind.

Eine gattungsgemäße Sondenanordnung ist aus der DE 195 18 342 A1 bekannt. Sie gewährleistet eine gute Auswertung der Signalinformation und ermöglicht eine ortsbezogene Detektion des gesuchten Objektes.

Um bei einem Suchvorgang möglichst effizient arbeiten zu können, ist es nützlich, den Rahmen großflächig zu gestalten, so daß zu einem Zeitpunkt eine möglichst große Fläche abgesucht wird. Je größer der Rahmen gewählt wird, desto unhandlicher wird allerdings die Sondenanordnung, so daß stets ein Kompromiß zwischen Arbeitseffizienz und Handhabbarkeit der Sondenanordnung zu suchen ist.

Der Erfindung liegt die **Aufgabe** zugrunde, den beschriebenen Nachteil auszuräumen und insbesondere eine Sondenanordnung zur Verfügung zu stellen, welche großflächig gestaltet werden kann und gleichzeitig eine gute Handhabbarkeit aufweist.

Diese Aufgabe wird mit den Merkmalen des Anspruches 1 gelöst.

Erfindungsgemäß ist der Rahmen mit einer fahrbaren Einrichtung kombiniert. Auf diese Weise ist es möglich auch großflächige Schleifen, die eine hohe Arbeitseffizienz beim Suchen mit sich bringen, bequem zu handhaben. Weiterhin ergibt sich aus der Kombination mit einer fahrbaren Einrichtung ein besonders genaues Abtasten der zu untersuchenden Fläche, da das Fahren der Sondenanordnung präziser erfolgen kann als ein freihändiges Führen derselben.

Besonders vorteilhaft ist es, wenn die fahrbare Einrichtung mindestens zwei Räder aufweist, welche den Rahmen tragen. Damit ist der Abstand des Rahmens zum zu untersuchenden Untergrund festgelegt, wobei eine ausreichend gute Manövrierfähigkeit erhalten bleibt. Selbstverständlich sind aber auch Sondenanordnungen mit nur einem Rad - nach dem Prinzip einer Schubkarre - denkbar, was insbesondere bei unebenem Gelände vorteilhaft sein kann.

Es ist bevorzugt, wenn der Rahmen mit einer Verstärkungsplatte kombiniert ist. Eine solche Verstärkungsplatte, welche vorzugsweise mittig an dem Rahmen angeordnet wird, hat eine stabilisierende Wirkung, so daß der Rahmen aus leichten Materialien gefertigt werden kann, ohne daß die erforderliche Stabilität verloren geht.

Besonders vorteilhaft ist es, wenn der Rahmen direkt oder indirekt mit einem Gerätegestell oder Gerätegehäuse zur Aufnahme elektronischer Komponenten oder dergleichen verbunden ist. Damit ist eine einheitliche Anordnung bereitgestellt, was die Handhabbarkeit nochmals fördert.

Vorzugsweise ist der Rahmen über die Verbindungsplatte mit dem Gerätegestell oder dem Gerätegehäuse verbunden. Da die Verbindungsplatte im allgemeinen der stabilste Teil der aus Rahmen und Verbindungsplatte gebildeten Anordnung ist, bietet sich die genannte Lösung als besonders robuste Variante an.

Nützlich ist, wenn der Rahmen direkt oder indirekt mit einem Handgriff zum Schieben oder Ziehen verbunden ist. Damit ist sichergestellt, daß die Anordnung zuverlässig über das zu untersuchende Gelände geführt werden kann und daß die Anordnung nicht in untunlicher Weise an eventuell vorhandenen empfindlichen Komponenten mechanisch beansprucht wird.

Dabei ist es besonders bevorzugt, wenn der Rahmen über das Gerätegestell oder das Gerätegehäuse mit einem Handgriff zum Schieben oder Ziehen verbunden ist. Auf diese Weise ist der Handgriff mit den stabilen Teilen der Anordnung, nämlich dem Gerätegestell oder dem Gerätegehäuse und vorzugsweise mit der Verbindungsplatte verbunden.

In einer bevorzugten Variante ist der Handgriff abschraubbar. Diese Ausgestaltung ist vor allem im Zusammenhang mit dem Transport der Sondenanordnung nützlich.

Besonders bevorzugt ist es, wenn das Gerätegestell oder das Gerätegehäuse eine schräge Bedienungsfront zur Aufnahme von Anzeige- und/oder Bedienelementen aufweist. Die Schräge kann so angeordnet sein, daß der Anwender stets in bequemer Weise die Anzeigeelemente beobachten und die Bedienelemente erreichen kann. Die Anordnung der Bedienungsfront an dem Gestell oder dem Gehäuse ist vor allem dann nützlich, wenn auch der Handgriff an dem Gestell oder Gehäuse angeordnet ist, da in diesem Fall der Anwender gleichzeitig schieben oder ziehen und einstellen bzw. beobachten kann.

Nützlich ist, wenn die Bedienungsfront eine transparente Abdeckung aufweist, welche als Halter für Karten und/oder Dokumente ausgebildet ist. Der Anwender hat somit die Möglichkeit zahlreiche Informationen gleichzeitig im Auge zu behalten und dabei insbesondere ohne Unterbrechung die Anzeigeinstrumente zu beobachten.

Vorzugsweise sind in dem Gerätegestell oder Gerätegehäuse Einschübe zur Aufnahme elektrischer und/oder elektronischer Komponenten vorgesehen. Damit ist ein leichter Zugriff auf die genannten Komponenten möglich. Ferner ist es denkbar einen Einschub insgesamt zur Reparatur oder Wartung auszutauschen.

Ebenso kann das Gerätegehäuse auch einen Deckel aufweisen, welcher abnehmbar ist und so den Zugriff zu den im Inneren angeordneten Komponenten ermöglicht.

Vorzugsweise ist an dem Gerätegestell oder Gerätegehäuse ein Stellfuß angeordnet. Die Sondenanordnung kann damit zur Unterbrechung der Untersuchung bzw. zur genaueren Untersuchung eines konkreten Geländeabschnittes abgestellt werden. Insbesondere, wenn zwei Räder vorgesehen sind, ist durch einen Stellfuß ein sicherer Stand der Anordnung gewährleistet.

Der Stellfuß ist in einer bevorzugten Ausführungsform einschiebbar. Auf diese Weise kann er stets an der Anordnung verbleiben, ohne bei dem Verschieben der Anordnung zu stören.

Es ist auch denkbar, daß der Stellfuß als gefedertes Spornrad ausgebildet ist. Damit kann die Anordnung auch während des Schiebens oder Ziehens in eine besonders stabile Lage gebracht werden, so daß insbesondere der Abstand der einzelnen Rahmenelemente zum Untergrund in sicherer Weise konstant gehalten werden kann.

Vorzugsweise sind mehrere Schleifen zum Senden und/oder Empfangen von Magnetfeldsignalen vorgesehen, wobei die Schleifen matrixförmig angeordnet und insbesondere als Empfangsschleifen ausgebildet sind, wobei eine Sendeschleife vorgesehen ist und die Sendeschleife umlaufend um die matrixförmig angeordneten Empfangsschleifen ausgebildet ist. Aufgrund der unterschiedlichen Entfernung und räumlichen Anordnung der verschiedenen Empfangsschleifen zu dem Objekt ist es möglich Sekundärsignale zu messen, die sich voneinander unterscheiden. Diese unterschiedlichen Meßwerte können dann miteinander verknüpft oder verglichen werden, um auf diese Weise eine exakte Information über den Ort und die Lage des zu detektierenden Objektes zu erhalten.

Besonders vorteilhaft ist es, wenn die Empfangsschleifen in Form einer zweidimensionalen Matrix angeordnet sind. Durch die Auswertung von derartig angeordneten Empfangsschleifen ist eine exakte und genaue Orts- und Tiefenbestimmung des Objektes möglich. Dazu erfolgt vorzugsweise eine getrennte Abfrage der Empfangsspulen in x- und y-Richtung.

Ferner kann vorteilhaft sein, wenn bei der Sondenanordnung mehrere Empfangsschleifen zu einer Hauptschleife zusammengeschaltet sind. Auf diese Weise können sowohl die einzelnen Empfangsschleifen als auch die Hauptschleife als Ganzes abgefragt und ausgewertet werden.

Die Erfindung wird im folgenden anhand eines Ausführungsbeispiels mit Bezug auf die begleitenden Zeichnungen im einzelnen erläutert.

Dabei zeigt
- Fig. 1: eine perspektivische Darstellung einer erfindungsgemäßen Sondenanordnung; und
- Fig. 2: eine weitere perspektivische Darstellung der Sondenanordnung gemäß Fig. 1.

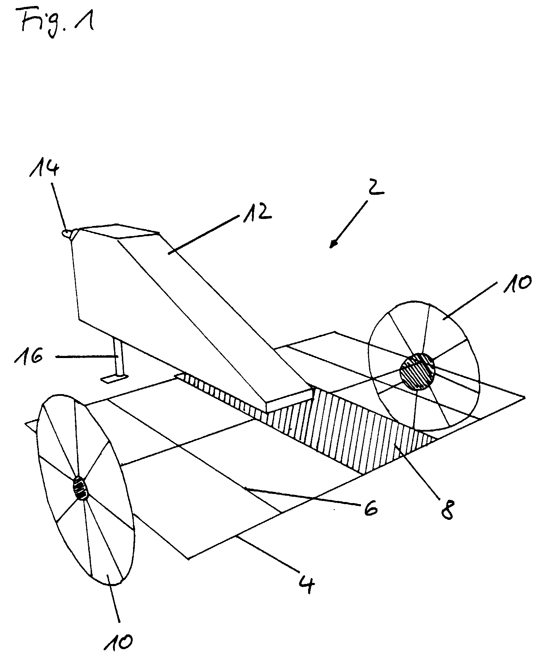

In Fig. 1 ist eine Sondenanordnung 2 zu erkennen, welche einen Rahmen 4 aufweist. Der Rahmen 4 ist mit Stegen 6 versehen. Insbesondere zur Stabilisierung des Rahmens 4 ist in seinem zentralen Bereich eine Verstärkungsplatte 8 angeordnet. Der Rahmen 4 mit den Stegen 6 und der Verstärkungsplatte 8 wird von zwei Rädern 10 getragen, so daß die gesamte Sondenanordnung 2 fahrbar ist.

An der Verstärkungsplatte 8 ist ein Gehäuse 12 angebracht, welches elektrische und elektronische Komponenten sowie etwa auch Batterien zum Betrieb der Anordnung enthält. An dem Gehäuse 12 sind ein Handgriff 14 sowie ein Stellfuß 16 angebracht.

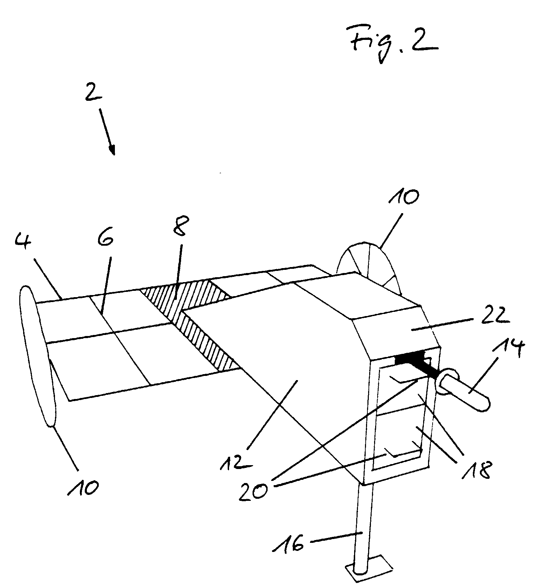

Fig. 2 zeigt die Sondenanordnung gemäß Fig. 1 in einer anderen Perspektive. Zusätzlich sind zwei Einschübe 18 mit Griffen 20 zu erkennen. Ebenfalls ist ein schräges Bedienfeld 22 dargestellt, welches Bedienelemente und/oder Anzeigeelemente aufnimmt. Ferner kann das Bedienfeld mit einer transparenten Scheiben, etwa einer Plexiglasscheibe, versehen sein, so daß Karten und/oder sonstige Dokumente im Bereich der Anzeige- und Bedienelemente in geschützter Weise angeordnet werden können. Dies ermöglicht dem Anwender ein konzentriertes Arbeiten mit der erfindungsgemäßen Sondenanordnung. An der Unterseite des Gehäuses 12 ist ein Stellfuß 16 angeordnet, welcher vorzugsweise einschiebbar ist. Der Handgriff 14 ist in einer bevorzugten Ausführungsform abschraubbar.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Sondenanordnung zur elektromagnetischen Detektion von Objekten, mit
- mindestens einem Rahmen (4),
- mindestens einem Steg (6), welcher die von dem Rahmen (4) definierte Fläche teilt, und
- mindestens einer Sendeschleife und/oder mindestens einer Empfangsschleife, welche in dem Rahmen und/oder dem Steg angeordnet ist/sind,
dadurch **gekennzeichnet,**
daß der Rahmen (4) mit einer fahrbaren Einrichtung (10) kombiniert ist.

2. Sondenanordnung nach Anspruch 1,
dadurch **gekennzeichnet,**
daß die fahrbare Einrichtung mindestens zwei Räder (10) aufweist, welche den Rahmen (4) tragen.

3. Sondenanordnung nach Anspruch 1 oder 2,
dadurch **gekennzeichnet,**
daß der Rahmen (4) mit einer Verstärkungsplatte (8) kombiniert ist.

4. Sondenanordnung nach einem der vorangehenden Ansprüche,
dadurch **gekennzeichnet,**
daß der Rahmen (4) direkt oder indirekt mit einem Gerätegestell oder Gerätegehäuse (12) zur Aufnahme elektronischer Komponenten oder dergleichen verbunden ist.

5. Sondenanordnung nach Anspruch 4,
dadurch **gekennzeichnet**,
daß der Rahmen (4) über die Verbindungsplatte (8) mit dem Gerätegestell oder dem Gerätegehäuse (12) verbunden ist.

6. Sondenanordnung nach einem der vorangehenden Ansprüche,
dadurch **gekennzeichnet,**
daß der Rahmen (4) direkt oder indirekt mit einem Handgriff (14) zum Schieben oder Ziehen verbunden ist.

7. Sondenanordnung nach einem der Ansprüche 4 bis 6,
dadurch **gekennzeichnet**,
daß der Rahmen (4) über das Gerätegestell oder das Gerätegehäuse (12) mit einem Handgriff (14) zum Schieben oder Ziehen verbunden ist.

8. Sondenanordnung nach Anspruch 6 oder 7,
dadurch **gekennzeichnet,**
daß der Handgriff (14) abschraubbar ist.

9. Sondenanordnung nach einem der Ansprüche 4 bis 7,
dadurch **gekennzeichnet,**
daß das Gerätegestell oder das Gerätegehäuse eine schräge Bedienungsfront (22) zur Aufnahme von Anzeige- und/oder Bedienelementen aufweist.

10. Sondenanordnung nach Anspruch 9,
dadurch **gekennzeichnet,**
daß die Bedienungsfront (22) eine transparente Abdeckung aufweist, welche als Halter für Karten und/oder Dokumente ausgebildet ist.

11. Sondenanordnung nach einem der Ansprüche 4 bis 10,
dadurch **gekennzeichnet,**
daß das Gerätegestell oder das Gerätegehäuse (12) Einschübe (18) zur Aufnahme elektrischer und/oder elektronischer Komponenten aufweist.

12. Sondenanordnung nach einem der Ansprüche 4 bis 11,
dadurch **gekennzeichnet,**
daß das Gerätegestell oder das Gerätegehäuse einen abnehmbaren Deckel aufweist.

13. Sondenanordnung nach einem der Ansprüche 4 bis 12,
dadurch **gekennzeichnet**,
daß an dem Gerätegestell oder Gerätegehäuse (12) ein Stellfuß (16) angeordnet ist.

14. Sondenanordnung nach Anspruch 13,
dadurch **gekennzeichnet,**
daß der Stellfuß (16) einschiebbar ist.

15. Sondenanordnung nach Anspruch 13 oder 14,
dadurch **gekennzeichnet,**
daß der Stellfuß (16) als gefedertes Spornrad ausgebildet ist.

16. Sondenanordnung nach einem der vorangehenden Ansprüche,
dadurch **gekennzeichnet**,
- daß mehrere Schleifen zum Senden und/oder Empfangen von Magnetfeldern vorgesehen sind,
- daß die Schleifen matrixförmig angeordnet und insbesondere als Empfangsschleifen ausgebildet sind,
- daß eine Sendeschleife vorgesehen ist, und
- daß die Sendeschleife umlaufend um die matrixförmig angeordneten Empfangsschleifen ausgebildet ist.

17. Sondenanordnung nach Anspruch 16,
dadurch **gekennzeichnet**,
daß die Empfangsschleifen in Form einer zweidimensionalen Matrix angeordnet sind.

18. Sondenanordnung nach Anspruch 16 oder 17,
dadurch **gekennzeichnet**,
daß mehrere Empfangsschleifen zu einer Hauptschleife zusammengeschaltet sind.
